# EUROPÄISCHE PATENTSCHRIFT

(11) **EP 2 540 574 B1**
(45) Veröffentlichungstag und Bekanntmachung des Hinweises auf die Patenterteilung: **29.01.2014**
(21) Anmeldenummer: 12401113.1
(22) Anmeldetag: 09.06.2012
(51) Int. Cl.: B60R 9/06, B60R 9/10

(54) **Zusammenklappbarer Lastenträger**
Collapsible load carrier
Support de charge repliable

(30) Priorität: 28.06.2011 DE 102011108658
(43) Veröffentlichungstag der Anmeldung: 02.01.2013
(73) Patentinhaber: I-Racks GmbH, 88284 Wolpertswende (DE)
(72) Erfinder: Ziola, Stefan, 88284 Wolpertswende (DE)
(74) Vertreter: Patentanwälte Hosenthien-Held und Dr. Held

(56) Entgegenhaltungen:
- DE-U1-202011 050 240
- DE-U1-202012 101 729
- US-A1- 2006 273 126
- US-B2- 7 240 816

## Beschreibung

Die Erfindung betrifft einen zusammenklappbaren Lastenträger, insbesondere Heckträger, gemäß dem Oberbegriff des Anspruches 1.

Aus der nachveröffentlichten DE 10 2010 036 898 A1 ist ein zusammenklappbarer Lastenträger bekannt, der zwei hochklappbare Stellbereiche hat, auf welche bis zu zwei Fahrräder stellbar sind. Der Lastenträger ist durch eine Basis und eine mit der Basis schwenkbar verbundene Trägeranordnung gebildet. Die Trägeranordnung, welche Auflagerrahmen aufweist, ist im hochgeklappten Zustand zweigeteilt, d.h. es besteht keine Verbindung zwischen den beiden Auflagerrahmen. Die Auflagerrahmen sind hierbei um zwei parallel verlaufende Klappachsen hochklappbar. Im einsatzbereiten Zustand sind die beiden Auflagerrahmen über Verbindungshülsen miteinander verbunden. Die Auflagerrahmen lassen sich für eine einfache Zugänglichkeit des Kofferraums innerhalb von Querbohrungen um eine Kippachse verdrehen. Hierbei schneiden sich die Kippachse und die beiden Klappachsen nicht. Eine entsprechende Ausgestaltung kann im Falle von Fehlbedienungen zu Beschädigungen führen.

Die EP 2 017 131 A2 offenbart einen Lastenträger mit einem zum Tragen einer Last vorgesehenen Ladegestell, das in einer Gebrauchsstellung des Lastenträgers nach hinten vor einen Heckbereich des Kraftfahrzeugs vorsteht und einen in einer Gebrauchsstellung des Lastenträgers im Wesentlichen horizontalen Ladebereich zum Aufladen einer Last bereitstellt, wobei der Lastenträger eine in der Gebrauchsstellung im Wesentlichen vertikale Stütze zum Halten der Last aufweist, und wobei der Lastenträger eine Verriegelungseinrichtung mit mindestens einem Verriegelungselement zum ortsfesten Verriegeln mindestens eines beweglichen Lastenträgerbauteils des Lastenträgers aufweist. Bei dem Lastenträger ist vorgesehen, dass eine Handbetätigungseinrichtung zum Betätigen der Verriegelungseinrichtung an einem oberen, von dem Ladebereich entfernten Endbereich der Stütze angeordnet ist, und dass er mindestens ein Übertragungsglied in Gestalt eines Seilzugs zum Übertragen einer Betätigungsbewegung der Handbetätigungseinrichtung auf das Verriegelungselement aufweist. Ferner sind zwei sich im Wesentlichen in horizontaler Richtung parallel zueinander erstreckende, feststehende Trägerrohre vorgesehen, welche Teil des Ladegestells sind, um welche Schwenkteile verschwenkbar sind, welche den Ladebereich erweitern können.

Die US 7 240 816 B2 offenbart einen klappbaren Lastenträger, bei welchem zwei um Bolzen verschwenkbare Profilrohre in einer U-förmigen Aufnahme zwischen einer hochgeklappten Stellung und einer heruntergeklappten Stellung anordenbar sind. Die Fixierung erfolgt in den beiden Endstellungen über Bolzen, welche durch Bohrungen in den Profilrohren und der Aufnahme vorgesehen sind. Die Aufnahme ist an einer durch ein weiteres Profilrohr gebildeten Basis angeordnet, welche in einem sogenannten Hitch Mount Receiver mittels eines Bolzens gehalten wird. Der Lastenträger ist nicht kippbar, beispielsweise um an den Kofferraum des Fahrzeugs gelangen zu können.

Aus der DE 10 2006 013 465 A1 ist eine Spannvorrichtung mit einem Spannhebel bekannt, welcher die Bewegung eines Spannbügels über einen Kopf einer Anhängerkupplung bewirkt. Die Betätigung des Spannhebels hat keinen Einfluss auf einen möglichen Stellbereich des Lastenträgers.

Die DE 699 05 676 T2 offenbart ein Spannen eines Lastenträgers mittels einer Schwenkbewegung eines Trägers, jedoch lässt sich dieser Lastenträger nicht kippen, so dass die Zugänglichkeit des Kofferraums beeinträchtigt ist.

Die gattungsbildende US 2006/0273126 A1 offenbart einen Fahrradträger, der um sich parallel erstreckende Arme einzeln verschwenkbare, in ihrer Gestalt der Radform angepasste Stellbereiche aufweist. Die Arme sind über einen bügelartigen Verbindungsbereich miteinander starr verbunden, wobei der bügelartige Verbindungsbereich in einem Hülsenbereich drehbar gelagert ist. Die Fixierung des bügelartigen Verbindungsbereichs erfolgt mittels eines Bolzens, welcher in die Geometrie von bügelartigem Verbindungsbereich und denselben drehbar aufnehmenden Hülsenbereich eingreift Gemäß der US2006/0273126 A1 lassen sich die Stellbereiche vollständig unabhängig von der Position des bügelartigen Verbindungsbereichs und dessen Fixierungszustand bewegen.

Die vorstehenden Lastenträger lassen daher noch Wünsche offen.

Der Erfindung liegt daher die Aufgabe zu Grunde, einen Lastenträger zu verbessern. Insbesondere soll der Lastenträger einfach bedienbar sein und Beschädigungen durch Fehlbedienungen sollen verhindert werden.

Diese Aufgabe wird erfindungsgemäß durch einen Lastenträger mit den Merkmalen des Anspruchs 1 gelöst. Vorteilhafte Ausgestaltungen sind Gegenstand der Unteransprüche.

Dadurch, dass der zusammenklappbare Lastenträger durch eine an einer Anhängerkupplung fixierbare Basis und eine Trägeranordnung gebildet ist, wobei Basis und Trägeranordnung mindestens einen gemeinsam um eine gemeinsame Klappachse klappbaren Bereich aufweisen, wobei die Klappbewegung des klappbaren Bereichs nach unten eine Spannbewegung zur Befestigung des Lastenträgers bewirkt, und die Trägeranordnung um eine zweite Achse im aufgeklappten Zustand des Lastenträgers relativ zur Basis kippbar ist, wobei bei normaler Nutzung, d.h. bei bestimmungsgemäßem Gebrauch, eine Festlegung vorgesehen ist, um ein Verkippen zwischen Basis und Trägeranordnung zu verhindern, ermöglicht sich eine gewichtssparende Ausgestaltung des Lastenträgers, wobei der Ladebereich des Lastenträgers im angebrachten, aufgeklappten Zustand beispielsweise nach hinten kippen lässt, um das Be- und Entladen zu erleichtern, oder um den Kofferraum zugänglich zu machen. Vorsorglich sei angemerkt, dass die Begriffe Kippen und Klappen im Folgenden als Synonym zu Schwenken verwendet werden.

Insbesondere bevorzugt schneiden sich die Klappachse, um welche der Lastenträger zusammenklappbar ist, und die zweite Achse, im Folgenden als Kippachse bezeichnet, um welche der Ladebereich kippbar ist, senkrecht zueinander.

Der gemeinsam klappbare Bereich der Basis ist vorzugsweise durch eine Konsole und der gemeinsam kippbare Bereich der Trägeranordnung durch einen Trägerarm gebildet, welcher drehbar, vorzugsweise konzentrisch, in der Konsole gelagert ist, so dass ein einfaches Verschwenken des Ladebereichs, d.h. ein Kippen nach hinten, möglich ist, ohne die Zusammenklappbarkeit des Lastenträgers zu behindern. Ferner ist bevorzugt ein Verschieben des Trägerarms innerhalb der Konsole entlang der Kippachse möglich.

Vorzugsweise sind mehrere gelenkig miteinander verbundene, gemeinsam verschwenkbare Bereiche, welche Teil des Ladebereichs sind, vorgesehen, wobei die Gelenkachsen, d.h. die Klappachsen, der Bereiche senkrecht zur gemeinsamen Kippachse angeordnet sind.

In aufgeklapptem Zustand des Lastenträgers fluchten vorzugsweise die beiden Trägerarme miteinander, wobei sie nach Lösen einer Verriegelung einer Kippvorrichtung um besagte Kippachse relativ zur Basis kippbar sind, d.h. die Stellfläche ist im aufgeklappten Zustand zusammen mit dem Stützbügel nach hinten kippbar. Dahingegen sind im zusammengeklappten Zustand des Lastenträgers die Trägerarme in einem hochgeklappten, basisverbundenen Bereich, nämlich den Konsolen, angeordnet, wodurch ein Kippen auch bei einem Außereingriffgelangen der Verriegelung der Kippvorrichtung verhindert wird und dadurch die Benutzungssicherheit des Lastenträgers erhöht wird.

Der Lastenträger weist vorzugsweise eine Kupplungsvorrichtung auf, mittels welcher der Lastenträger an einer Anhängerkupplung mit einem im Wesentlichen kugelförmigen Kopf lösbar anbringbar ist, wobei der Lastenträger stabilisiert die Anhängerkupplung aufsetzbar ist, anschließend ein Spannbügel über den Kopf der Anhängerkupplung schwenkbar und mittels Spannens eines Spannbügels fixierbar ist, und das Einschwenken und Spannen des Spannbügels durch eine Schwenkbewegung eines einzigen als Bedienelement dienenden Hebels um die Klappachse erfolgt, wobei der als Bedienelement dienende Hebel gleichzeitig auch den Stellbereich bildet und sowohl einen Teilbereich der Basis als auch der Trägeranordnung umfasst. Wenn das Einschwenken und Spannen des Spannbügels durch eine einfache Schwenkbewegung eines einzigen als Bedienelement dienenden Hebels um eine stationäre Schwenkachse, d.h. die Klappachse, erfolgt, wobei der als Bedienelement dienende Hebel gleichzeitig auch den Stellbereich bildet, ergibt sich eine sehr einfache, sichere Betätigung. Die Zahl möglicher Bedienfehler kann minimiert werden. Der Hebel ist, wenn er gleichzeitig den Stellbereich bildet, mit einem sehr großen Hebelarm ausgebildet sein, so dass geringe Bedienkräfte zu sehr hohen Spannkräften führen und die Bedienung leicht ist. Durch die Doppelfunktion des Stellbereichs und des ihn tragenden Trägerarms kann zudem Gewicht eingespart werden, so dass der Lastenträger leichter bauen kann.

Insbesondere bevorzugt ist die Schwenkbewegung des Hebels mittels eines einzigen Übertragungselements an die Kupplungsvorrichtung übertragbar, und die Kupplungsvorrichtung weist eine Getriebeanordnung auf, welche die Schwenkbewegung des Hebels in einem ersten Teilbereich in eine Einschwenkbewegung des Spannbügels und in einem zweiten Teilbereich in eine Spannbewegung des Spannbügels umsetzt. Das Übertragungselement ist hierbei Teil der Basis.

Vorzugsweise ist hierbei eine Ausgleichsanordnung vorgesehen, welche in einem dritten Teilbereich der Schwenkbewegung des Hebels einen Ausgleich für unterschiedliche Kugeldurchmesser des Kopfes der Anhängerkupplung vorsieht, wobei der dritte Teilbereich der Schwenkbewegung zwischen dem ersten Teilbereich, in welchem die Einschwenkbewegung erfolgt, und dem zweiten Teilbereich, in welchem die Spannbewegung des Spannbügels erfolgt, vorgesehen ist. Auch diese Ausgleichsanordnung ist Teil der Basis, d.h. unabhängig von einem Kippen des Ladebereichs des Lastenträgers. Diese Ausgleichsanordnung ermöglicht trotz des Ausgleichs unterschiedlicher Kugeldurchmesser des Kopfes eine annähernd konstante Spannkraft. Unabhängig hiervon hat der Kugeldurchmesser des Kopfes keinen Einfluss auf die Schwenkbewegung des Hebels, d.h. die Ausgangs- und Endlage desselben ist immer gleich, so dass mit einfachen Mitteln ein korrektes Spannen überwacht werden kann, beispielsweise durch die Verriegelbarkeit des Hebels in der gespannten Stellung.

Eine Getriebeanordnung ist vorzugsweise vorgesehen, welche ausgehend von einer reinen Schwenkbewegung (Klappbewegung) eines Teilbereichs der Trägeranordnung samt eines Teilbereichs der Basis das Einschwenken des Spannbügels und das Spannen des Spannbügels bewirkt, durch ein Hebelgetriebe und/oder Kurvengetriebe gebildet ist, wobei die Getriebeanordnung Teil der Basis ist.

Obwohl im Folgenden als Lastenträger auf sogenannte Heckträger Bezug genommen wird, kann bei Sonderfahrzeugen die Anhängerkupplung auch an einer anderen Seite des Fahrzeugs vorgesehen sein, beispielsweise an der Vorderseite. Selbstverständlich kann der erfindungsgemäße Lastenträger auch hierfür verwendet werden.

Im Folgenden ist die Erfindung anhand eines Ausführungsbeispiels unter Bezugnahme auf die beiliegende Zeichnung näher erläutert. In der Zeichnung zeigen:

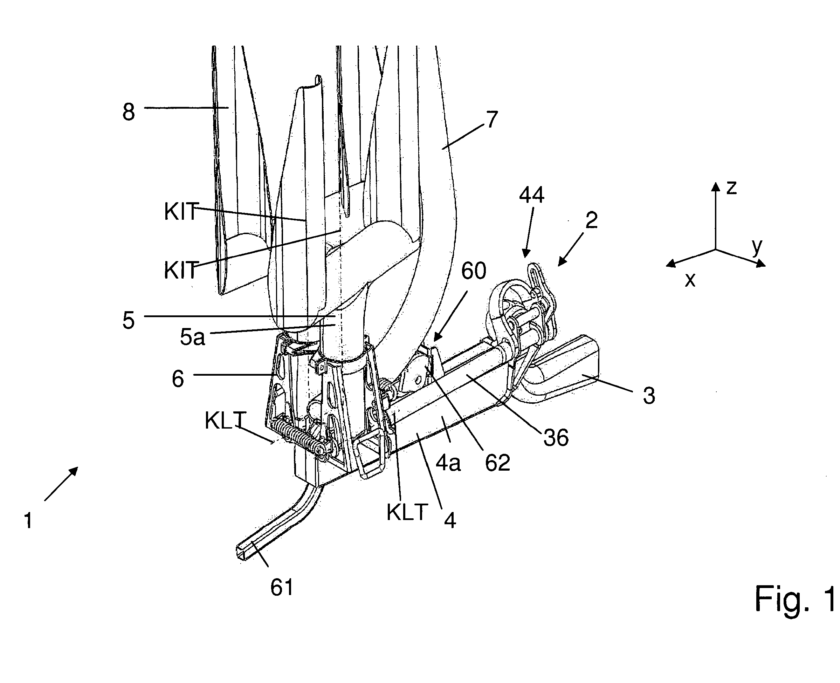

- Fig. 1: eine perspektivische Ansicht des zentralen Bereichs des Lastenträgers gemäß dem Ausführungsbeispiel mit geöffneter Kupplungsvorrichtung in zusammengeklappter Stellung,

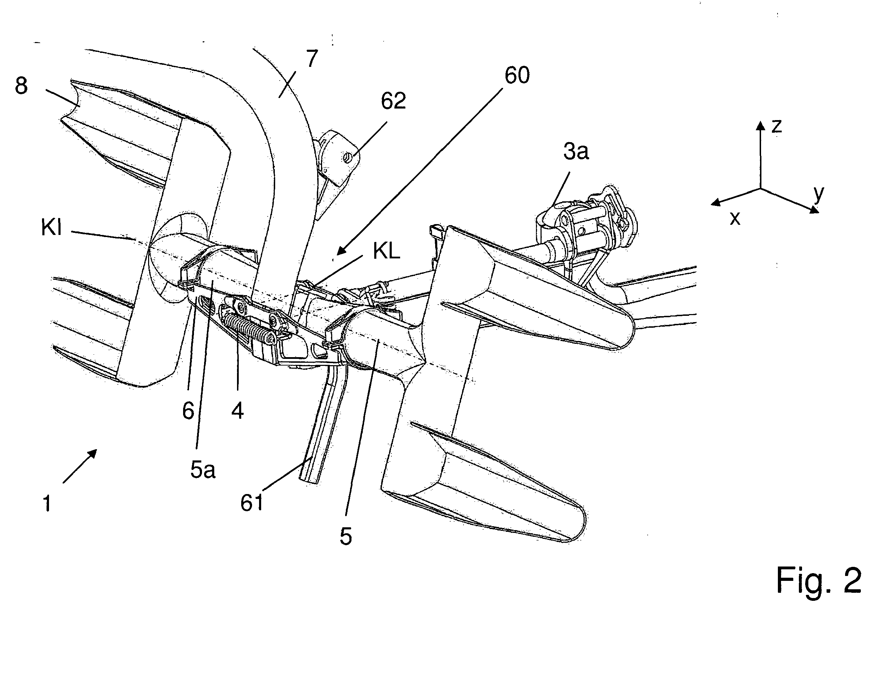

- Fig. 2: eine perspektivische Ansicht des Lastenträgers in an der Anhängerkupplung angebrachter Stellung bei gekipptem Ladebereich,

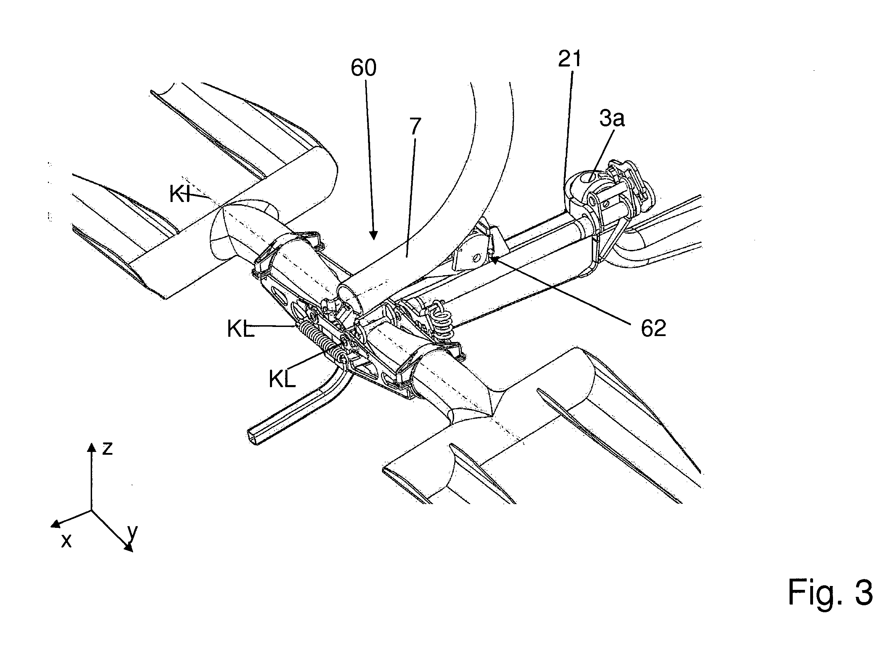

- Fig. 3: eine perspektivische Ansicht des zentralen Bereichs des Lastenträgers in einsatzbereiter Stellung,

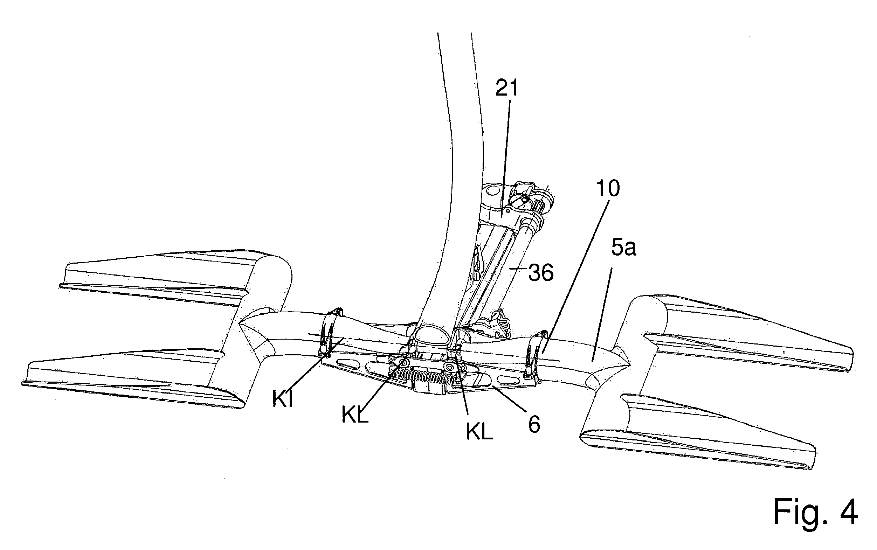

- Fig. 4: eine andere perspektivische Ansicht von Fig. 3,
- Fig. 5: eine Fig. 4 entsprechende explosionsartige Ansicht von Basis und Trägeranordnung in aufgeklappter Stellung,
- Fig. 6: eine andere perspektivische Ansicht,
- Fig. 7: eine Seitenansicht eines Kraftfahrzeugs mit angebrachtem, einsatzbereitem Lastenträger, und
- Fig. 8: eine Draufsicht auf Fig. 7.

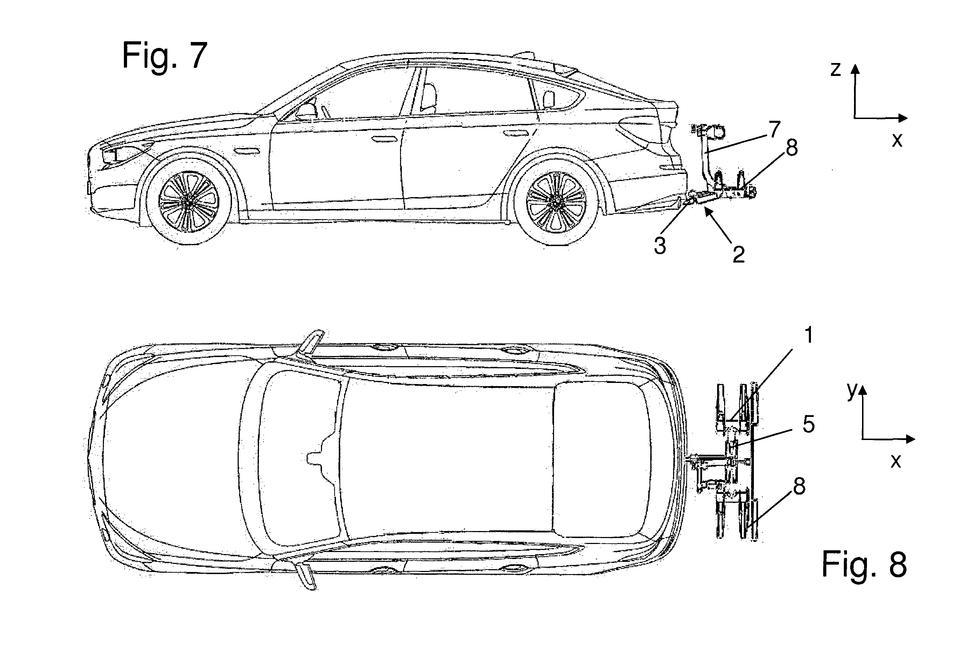

Bei der folgenden Beschreibung wird von einem als Heckträger an einer Anhängerkupplung angebrachten Lastenträger 1, wie in den Figuren 7 und 8 dargestellt, ausgegangen. Die Richtungsangaben beziehen sich auf die normale Fahrtrichtung des Fahrzeugs, wobei x die Richtung entgegen der Fahrtrichtung, y die Querrichtung und die vertikale Richtung mit z bezeichnet.

Ein zusammenklappbarer Lastenträger 1, der vorliegend dem Transport von zwei oder mehr Fahrrädern oder zum Transport sonstiger Lasten, wie beispielsweise Skiern, Snowboards, einer Heckbox, dienen kann, ist mit Hilfe einer Kupplungsvorrichtung 2 an einer Anhängerkupplung 3 eines Kraftfahrzeugs anbringbar. Die Anhängerkupplung 3 weist hierbei einen im Wesentlichen kugelförmigen Kopf 3a mit einer ebenen Oberseite und einen von unten in die Kugel eindringenden Hals auf.

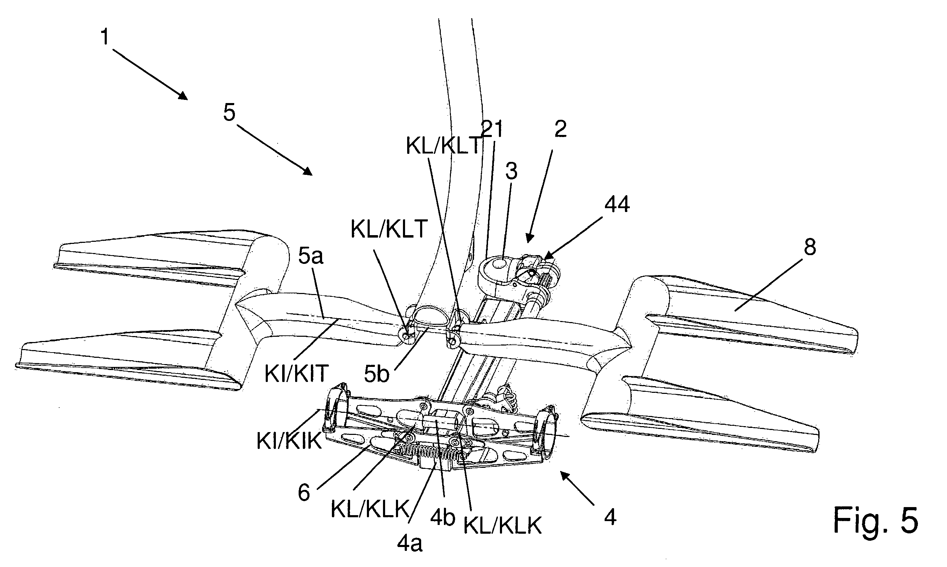

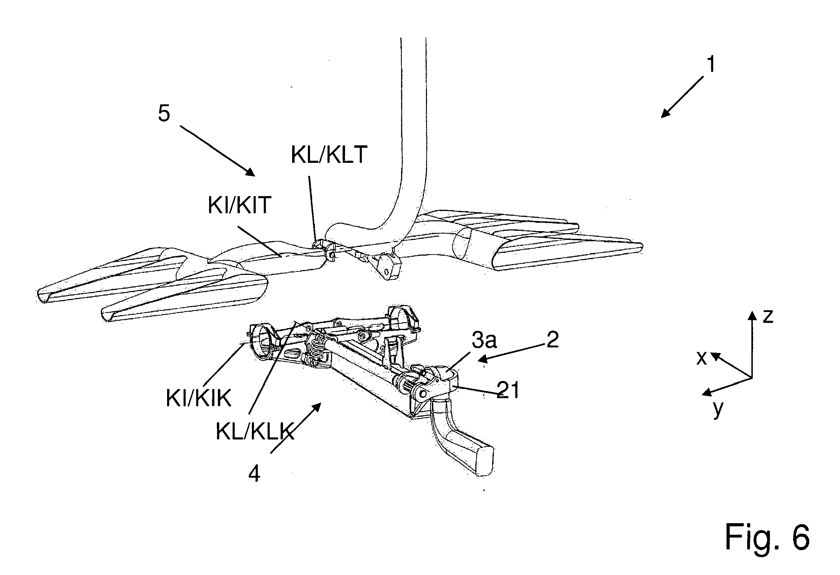

Der Lastenträger 1 weist eine Basis 4 und eine hiermit verbundene Trägeranordnung 5 auf. Basis 4 und Trägeranordnung 5 sind zum Lastenträger 1 zusammengesetzt, wobei die Zusammengehörigkeit einzelner Bestandteile von Basis 4 bzw. Trägeranordnung 5 beispielsweise aus Fig. 5 und 6 ersichtlich ist.

Die Basis 4 weist einen zentralen Träger 4a auf, welcher bei einem korrekt an einem Kraftfahrzeug als Heckträger angebrachten Lastenträger 1 in Fahrzeuglängsrichtung verlaufend ausgerichtet ist und im Querschnitt im Wesentlichen die Gestalt eines geschlossenen Hohlprofils aufweist. An einem Ende des zentralen Trägers 4a ist die Kupplungsvorrichtung 2 angeordnet. Am anderen Ende des zentralen Trägers 4a ist eine Stützanordnung für den zusammenklappbar ausgebildeten, den eigentlichen Ladebereich bildenden Teil des Lastenträgers 1 vorgesehen. Vorliegend ist der Ladebereich des Lastenträgers 1 ausschließlich durch die Trägeranordnung 5 gebildet, welche von der Basis 4 getragen wird.

Die Trägeranordnung 5 weist um Trägerarm-Klappachsen KLT verschwenkbar angeordnete Trägerarme 5a auf. Die Stützanordnung der Basis 4 weist um Konsolen-Klappachsen KLK verschwenkbar angeordnete Konsolen 6 auf, welche mit dem zentralen Träger 4a mittels geeigneter Lagerstellen schwenkbar verbunden sind, d.h. einen Teil der Basis 4 bilden. Die Konsolen 6 der Basis 4 nehmen die Trägerarme 5a formschlüssig auf, wobei die Trägerarme 5a rotationssymmetrisch zu ihrer Trägerarm-Längsachse, im Folgenden aufgrund ihrer Ausrichtung und Funktion als Trägerarm-Kippachse KIT bezeichnet, ausgebildet sind und - sofern sie nicht an anderer Stelle fixiert sind, innerhalb der Konsolen 6 drehbar und längsverschiebbar aufgenommen sind.

Trägerarme 5a und Konsolen 6 sind somit im zusammengebauten Zustand des Lastenträgers 1 konzentrisch angeordnet, d.h. die Trägerarm-Kippachsen KIT und die entsprechenden Konsolen-Kippachsen KIK fallen im zusammengebauten Zustand des Lastenträgers aufeinander, weshalb sie in der Zeichnung auch ausschließlich mit KI bezeichnet sind.

Ferner fallen die Konsolen-Klappachsen KLK und die Trägerarm-Klappachsen KLT aufeinander, weshalb sie in der Zeichnung auch ausschließlich mit KL bezeichnet sind. Hierbei sind vorliegend Trägerarme 5a und Konsolen 6 exzentrisch bezüglich der Mittellängsachse des zentralen Trägers 4a angebracht, wobei die Kippachsen KI der Trägerarme 5a (und damit die entsprechenden Achsen der dieselben aufnehmenden Konsolen 6) in der zusammengeklappten Stellung des Lastenträgers 1 im Wesentlichen parallel zueinander angeordnet sind und in ihrer aufgeklappten, einsatzbereiten Stellung im Wesentlichen miteinander fluchten.

Ein etwa um 90° gebogen ausgebildeter Stützbügel 7 ist mit seinem horizontal verlaufenden Schenkel oberhalb des zentralen Trägers 4a, zwischen den schwenkbar angebrachten Endbereichen der Trägerarme 5a angeordnet und erstreckt sich mit seinem vertikal verlaufenden Schenkel etwas beabstandet von der Kupplungsvorrichtung 2 nach oben. Hierbei ist der Stützbügel 7, wie beispielsweise aus Fig. 5 ersichtlich, über die Trägerarm-Klappachsen KLT mit den beiden Trägerarmen 5a gelenkig verbunden. Ein unter dem Stützbügel 7 angeordneter Lagerbereich 5b ist in einem entsprechenden Lager 4b am zentralen Träger 4a verschwenkbar um die Querrichtung gelagert, wobei das Lager 4b konzentrisch zu den Kippachsen KI bei aufgeklapptem Lastenträger 1 angeordnet ist.

Wie beispielsweise aus Fig. 6 ersichtlich, bilden der zentral angeordnete Lagerbereich 5b, die beiden Trägerarme 5a, die mit dem Lagerbereich 5b schwenkbar verbunden sind, und der Stützbügel 7, welcher starr mit dem zentralen Bereich verbunden ist, sowie an den Trägerarmen 5a ausgebildete Stellbereiche 8 die Trägeranordnung 5.

Sollen mit dem aufgeklappten Lastenträger 1 beispielsweise zwei Fahrräder transportiert werden, so stehen dieselben parallel zueinander, in y-Richtung ausgerichtet, mit ihren Rädern auf entsprechend ausgebildeten Stellbereichen 8 an den Trägerarmen 5a und werden im oberen Bereich mittels nicht im Detail dargestellter Haltern, Schellen, Bügeln o.ä. mit dem Stützbügel 7 auf an sich bekannte Weise verbunden. Die Trägeranordnung 5 mit den Trägerarmen 5a samt Stützbügel 7 und Lagerbereich 5b sind hierbei wie vorstehend beschrieben derart ausgebildet, dass sie im aufgeklappten Zustand um die Kippachse KI drehbar im Lager 4b bzw. in dem Konsolen 6 angeordnet sind, so dass die an den Trägerarmen 5a gabelförmig ausgebildeten Stellbereiche 8 für die zu befördernde Last beispielsweise zum Beladen oder Entladen, oder für eine einfacher Zugänglichkeit des Kofferraums des Fahrzeugs geschwenkt und so nach hinten gekippt werden können. Zum Kippen der Trägeranordnung 5 ist eine Kippvorrichtung 60 mit einem Pedal 61 und einer zum Kippen lösbaren Verriegelung 62 zwischen Stützbügel 7 und zentralem Träger 4a vorgesehen. Bei normalem Gebrauch ist die Trägeranordnung 5 über die Verriegelung 62 jedoch formschlüssig mit dem zentralen Träger 4a der Basis 4 verbunden.

Aufgrund der Lagerung der Trägeranordnung 5 mit ihren Trägerarmen 5a in den sich in Querrichtung erstreckenden Konsolen 6 der Basis 4 sowie der Verriegelung 62 zwischen Stützbügel 7 und Basis 4 ergibt sich eine breite Verteilung für die Krafteinleitung von der eine Last tragenden Trägeranordnung 5 in die Basis 4. Insbesondere die größten, entgegen der z-Richtung wirkenden Kräfte, die über die Stellflächen 8 eingeleitet werden, können durch diese Anordnung auf direktem Weg zur Anhängerkupplung 3 übertragen werden. Kräfte in x-Richtung, die vom Stützbügel 7 übertragen werden, werden über die Verriegelung 62 direkt in den zentralen Träger 4a der Basis 4 eingeleitet und belasten nicht den Schwenkbereich der Trägerarme 5a bzw. der Konsolen 6. Die Trägerarme 5a wirken insgesamt als Biegebalken und der zentrale Träger 4a wirkt als Biegebalken, wobei Querbelastungen als Torsionskräfte auf ihn wirken.

Aufgrund ihrer gemeinsamen Bewegung und der Funktion beim vorliegenden Ausführungsbeispiel wird auf die Gesamtheit von Konsole 6 und Trägerarm 5a sowie den Stellbereich 8 auch als Hebel 10 eingegangen. Zum Betätigen kann ein entsprechender, nicht dargestellter Griffbereich an allen Bereichen ausgebildet oder steif hiermit verbunden sein. Der vorliegend in Fahrtrichtung des Fahrzeugs rechts angeordnete Trägerarm 5a in Verbindung mit der entsprechenden, den Trägerarm 5a aufnehmenden Konsole 6 ist gleichzeitig Betätigungselement für die Kupplungsvorrichtung 2, während der zweite Trägerarm 5a vorliegend keine in Verbindung mit der Kupplungsvorrichtung 2 stehende Zusatzfunktion hat.

Im Folgenden werden der Aufbau und die Funktion der Kupplungsvorrichtung 2, welche dazu dient, den Lastenträger 1 mit der Anhängerkupplung 3 sicher zu verbinden, kurz beschrieben. Die Ausgestaltung der Kupplungsvorrichtung 2 kann jedoch auch auf beliebige andere Weise sein. Der eigentliche Kupplungsbereich, also der Bereich, in welchem der Lastenträger 1 mit der Anhängerkupplung 3 verbunden ist, weist als wesentliche Teile eine stationär bezüglich des zentralen Trägers 4a ausgebildete Kalotte 20 und einen relativ hierzu beweglichen Spannbügel 21 auf. Für eine Stabilisierung der Position des Lastenträgers 1 vor dem Spannen ist zudem eine V-oder U-förmige Abstützung im Halsbereich der Anhängerkupplung 3 vorgesehen. Diese Abstützung hat jedoch für das eigentliche Spannen der Kupplungsvorrichtung 2 keine Funktion. Eine derartige Stabilisierung ist vom Prinzip her beispielsweise aus der DE 195 40 041 A1 bekannt. Im Prinzip kann die Stabilisierung jedoch auch anders ausgebildet sein, solange sie nicht mit den Bewegungsabläufen beim Schließen des Spannbügels 21 und dem Spannen desselben nicht interferiert. Auf der Rückseite der Kalotte 20 ist ein spiegelbildlich zu einer Mittelebene ausgebildetes Gestell mit mehreren Lagerstellen zur trägerfesten Lagerung der Mechanik für die Kupplungsvorrichtung 2 ausgebildet. Für ein definiertes Spannen und Sichern der Kupplungsvorrichtung 2 ist auf der kupplungsseitigen Außenseite der rechten Konsole 6 eine Rastvorrichtung 30 angeordnet. Die Rastvorrichtung 30 ermöglicht eine definiertes Schwenken des Spannbügels 21, wobei die Bewegung der Konsole 6 auf ein Übertragungselement 36 und von demselben an ein Mehrgelenk übertragen wird, welches ein definiertes Einschwenken und Spannen des Spannbügels 21 bewirkt. Im Idealfall ist zumindest ein Teilbereich der Schwenkbewegung des Hebels 10 ohne Auswirkung auf die Bewegung des Spannbügels 21, wobei dieser Teilbereich der Schwenkbewegung des Hebels 10 zwischen einem ersten Teilbereich der Schwenkbewegung liegt, in welchem des Spannbügel 21 sich frei bewegt und über den Kopf 3a der Anhängerkupplung 3 schwenkt, bis er in Anlage gelangt, und einem zweiten Teilbereich der Schwenkbewegung liegt, in welchem der Spannbügel 21 gespannt wird. Somit dient dieser Teilbereich der Schwenkbewegung einem Ausgleich des Kugeldurchmessers des Kopfes 3a und stellt eine konstante Endspannkraft sicher.

Unabhängig hiervon kann die Schwenkbewegung der Hebelarme auch unabhängig vom Spannen des Spannbügels sein, d.h. es ist im Kupplungsbereich eine eigenständige Kupplungsvorrichtung vorgesehen.

## Patentansprüche

1. Zusammenklappbarer Lastenträger (1) mit mindestens einem Stellbereich (8), auf welchen zu transportierende Last, insbesondere mindestens ein Fahrrad, stellbar ist,
wobei der Lastenträger (1) durch eine stationäre Basis (4) und eine mit der Basis (4) schwenkbar verbundene Trägeranordnung (5) gebildet ist,
wobei Basis (4) und Trägeranordnung (5) mindestens einen gemeinsam um eine gemeinsame Klappachse (KL) klappbaren Bereich aufweisen, welcher zumindest einen Teil des Stellbereichs (8) bildet, wobei
die Trägeranordnung (5) ausschließlich im aufgeklappten Zustand des Lastenträgers (1) um eine Kippachse (KI) relativ zur Basis (4) kippbar ist, **dadurch gekennzeichnet, dass** im nicht vollständig aufgeklappten Zustand sowie im zusammengeklappten Zustand durch die Geometrie der Trägeranordnung (5) ein Kippen um die Kippachse (KI) verhindert ist, und
bei normaler Nutzung im aufgeklappten Zustand eine Festlegung vorgesehen ist, um ein relatives Verkippen zwischen Basis (4) und Trägeranordnung (5) zu verhindern.

2. Lastenträger nach Anspruch 1, **dadurch gekennzeichnet, dass** der gemeinsam klappbare Bereich der Basis (4) durch eine Konsole (6) und der gemeinsam verschwenkbare Bereich der Trägeranordnung (5) durch einen Trägerarm (5a) gebildet ist, welcher drehbar um die Kippachse (KI) in der Konsole (6) gelagert ist..

3. Lastenträger nach einem der vorhergehenden Ansprüche, **dadurch gekennzeichnet, dass** gelenkig verbundene Bereiche der Basis (4), durch welche die Klappkachse (KL) und Kippachse (KI) verlaufen, vorgesehen sind, die in allen Stellungen des Lastenträgers (1) miteinander verbunden sind, und
dass die gelenkig verbundenen Bereiche der Trägeranordnung (5), durch welche die Klappachse (KL) und Kippachse (KI) verlaufen, in allen Stellungen des Lastenträgers (1) miteinander verbunden sind.

4. Lastenträger nach einem der vorhergehenden Ansprüche, **dadurch gekennzeichnet, dass** in aufgeklapptem Zustand des Lastenträgers (1) die Trägerarme (5a) miteinander fluchten und nach Lösen einer Verriegelung (62) einer Kippvorrichtung (60) um die Kippachse (KI) relativ zur Basis (4) kippbar sind, wohingegen im zusammengeklappten Zustand des Lastenträgers (1) die Trägerarme (5a) in einem hochgeklappten, basisfesten Bereich angeordnet sind, wodurch ein Kippen auch bei einem Außereingriffgelangen der Verriegelung (62) der Kippvorrichtung (60) verhindert wird.

5. Lastenträger nach einem der vorhergehenden Ansprüche, **dadurch gekennzeichnet, dass** an der Basis (4) ein Lager (4) vorgesehen ist, in welchem ein an der Trägeranordnung (5) ausgebildeter Lagerbereich (5b) kippbar gelagert ist.

6. Lastenträger nach einem der vorhergehenden Ansprüche, **dadurch gekennzeichnet, dass** die Trägeranordnung (5) in der Basis (4) gelagert ist, wobei sie in Richtung der Kippachse (KI) fixiert ist.

7. Lastenträger nach einem der vorhergehenden Ansprüche, **dadurch gekennzeichnet, dass** der Lastenträger (1) eine Kupplungsvorrichtung (2) aufweist, mittels welcher der Lastenträger (1) an einer Anhängerkupplung (3) mit einem im Wesentlichen kugelförmigen Kopf (3a) lösbar anbringbar ist, wobei der Lastenträger (1) insbesondere stabilisiert auf die Anhängerkupplung (3) aufsetzbar ist, anschließend ein Spannbügel (21) über den Kopf (3a) der Anhängerkupplung (3) schwenkbar und mittels Spannens des Spannbügels (21) fixierbar ist, und das Einschwenken und Spannen des Spannbügels (21) durch eine Schwenkbewegung eines einzigen als Bedienelement dienenden Hebels (10) um die Klappachse (KL) erfolgt, wobei der als Bedienelement dienende Hebel (10) gleichzeitig auch den Stellbereich (8) bildet, und einen Teilbereich der Basis (4) und der Trägeranordnung (5) umfasst.

8. Lastenträger nach Anspruch 7, **dadurch gekennzeichnet, dass** die Schwenkbewegung des Hebels (10) mittels eines einzigen zur Basis (4) gehörigen Übertragungselements (36) an die Kupplungsvorrichtung (2) übertragbar ist, und die Kupplungsvorrichtung (2) eine Getriebeanordnung aufweist, welche die Schwenkbewegung des Hebels (10) in einem ersten Teilbereich in eine Einschwenkbewegung des Spannbügels (21) und in einem zweiten Teilbereich in eine Spannbewegung des Spannbügels (21) umsetzt.

9. Lastenträger nach einem der vorhergehenden Ansprüche, **dadurch gekennzeichnet, dass** eine Getriebeanordnung vorgesehen ist, welche ausgehend von einer reinen Schwenkbewegung eines Teilbereichs der Trägeranordnung (5) samt eines Teilbereichs der Basis (4) das Einschwenken eines Spannbügels (21) und das Spannen des Spannbügels (21) bewirkt, durch ein Hebelgetriebe und/oder Kurvengetriebe gebildet ist, wobei die Getriebeanordnung Teil der Basis (4) ist.

10. Lastenträger nach einem der vorhergehenden Ansprüche, **dadurch gekennzeichnet, dass** ein Übertragungselement (36) zwischen einem um die Klappachse (KL) verschwenkbaren Teilbereich der Basis (4) und einer Kupplungsvorrichtung (2) vorgesehen ist, welches konzentrisch oder exzentrisch bezüglich der Klappachse (KL) des Hebels (10) angeordnet ist und die Schwenkbewegung an eine Getriebeanordnung überträgt, welche die Bewegung der Kupplungsvorrichtung (2) erzeugt.

## Claims

1. Foldable load carrier (1) with at least one adjusting area (8), on which the load to be transported, particularly at least one bicycle, can be placed,
in which the load carrier (1) is formed by a stationary base (4) and a carrier arrangement (5) pivotably connected with the base (4),
wherein the base (4) and the carrier arrangement (5) have at least one area that is foldable together around a common folding axis (KL) and which forms at least a part of the adjusting area (8), in which the carrier arrangement (5) exclusively in the opened state of the load carrier (1) is tiltable relatively to the base (4) around a tilting axis (KI), **characterised in that** in the not completely opened state as well as in the closed state a tilt around the tilting axis (KI) is prevented by the geometry of the carrier arrangement (5), and in normal use in the opened state a fixing is provided in order to prevent a relative tilt between base (4) and carrier arrangement (5).

2. Load carrier according to claim 1, **characterised in that** the area of the base (4) foldable together is formed by a console (6) and that the area of the carrier arrangement (5) pivotable together is formed by a carrier arm (5a), which is mounted in the console (6) rotatably around the tilting axis (KI).

3. Load carrier according to any of the preceding claims, **characterised in that** articulated areas of the base (4), through which the folding axis (KL) and the tilting axis (KI) pass, are provided, which in all positions of the load carrier (1) are connected to each other, and that the articulated areas of the carrier arrangement (5), through which the folding axis (KL) and tilting axis (KI) pass, in all positions of the load carrier (1) are connected to each other.

4. Load carrier according to any of the preceding claims, **characterised in that** in the opened state of the load carrier (1) the carrier arms (5a) align with each other and after release of a locking (62) of a tilting device (60) they are tiltable around the tilting axis (KI) relatively to the base (4), whereas in the folded state of the load carrier (1) the carrier arms (5a) are arranged in an area folded upwards fixed onto the base, by which a tilting even in case of disengagement of the locking (62) of the tilting device (60) is prevented.

5. Load carrier according to any of the preceding claims, **characterised in that** on the base (4) a bearing (4) is provided, in which a bearing area (5b) formed on the carrier arrangement (5) is tiltably mounted.

6. Load carrier according to any of the preceding claims, **characterised in that** the carrier arrangement (5) is mounted in the base (4), fixed in direction of the tilting axis (KI).

7. Load carrier according to any of the preceding claims, **characterised in that** the load carrier (1) presents a coupling mechanism (2), by which the load carrier (1) can be detachably attached to a trailer coupling (3) with a substantially spherical head (3a), in which the load carrier (1) can be placed particularly stabilized on the trailer coupling (3), afterwards a tensioning clamp (21) is pivotable over the head (3a) of the trailer coupling (3), and can be fixed by tensioning the clamp (21), and the swivelling in and tensioning of the clamp (21) is done by a swinging movement of a single lever (10), serving as control element, around the folding axis (KL), in which the lever (10) serving as control element at the same time also forms the adjusting area (8), and includes part of the base (4) and of the carrier arrangement (5).

8. Load carrier according to claim 7, **characterised in that** the swinging movement of the lever (10), by means of a single transmission element (36) belonging to the base (4), can be transmitted to the coupling mechanism (2), and the coupling mechanism (2) presents a gearing, which transforms the swinging movement of the lever (10) in a first partial zone into a swivelling in movement of the clamp (21) and in a second partial zone into a tensioning movement of the clamp (21).

9. Load carrier according to any of the preceding claims, **characterised in that** a gearing is provided, which, based on a pure swinging movement of a partial zone of the carrier arrangement (5) together with a partial zone of the base (4), entails the swivelling in of a clamp (21) and the tensioning of the clamp (21), is formed by a link mechanism and/or cam mechanism, wherein the gearing is part of the base (4).

10. Load carrier according to any of the preceding claims, **characterised in that** a transmission element (36), between a partial zone of the base (4) rotatable around the folding axis (KL) and a coupling mechanism (2), is provided, which is arranged concentrically or eccentrically as to the folding axis (KL) of the lever (10), and transfers the swinging movement to a gearing, which generates the movement of the coupling mechanism (2).

## Revendications

1. Porte-charge repliable (1) ayant au moins une zone de réglage (8) sur laquelle la charge à transporter, en particulier au moins une bicyclette, peut être placée,
où le porte-charge (1) est formé par une base fixe (4) et un système de support (5) relié de façon pivotante à la base (4),
où la base (4) et le système de support (5) présentent au moins une zone rabattable ensemble autour d'un axe de rabattement commun (KL), laquelle forme au moins une partie de la zone de réglage (8), où le système de support (5) exclusivement dans l'état ouvert du porte-charge (1) est basculant autour d'un axe de basculement (KI) par rapport à la base (4), **caractérisé en ce que**, dans l'état non complètement ouvert et dans l'état replié par la géométrie du système de support (5), un basculement autour de l'axe de basculement (KI) est empêché, et dans le cas d'usage normal à l'état ouvert une fixation est prévue, pour empêcher un basculement relatif entre la base (4) et le système de support (5).

2. Porte-charge selon la revendication 1, **caractérisé en ce que** la zone rabattable ensemble de la base (4) est formée par une console (6) et que la zone pivotante ensemble du système de support (5) est formée par un bras de support (5a), lequel est appuyé dans la console (6) de manière pivotante autour de l'axe de basculement (KI).

3. Porte-charge selon l'une des revendications précédentes, **caractérisé en ce que** des secteurs reliés de manière articulée de la base (4), à travers lesquels passent l'axe de rabattement (KL) et l'axe de basculement (KI), sont prévus, et sont liés entre eux dans toutes les positions du porte-charge (1), et que les secteurs reliés de manière articulée du système de support (5), à travers lesquels passent l'axe de rabattement (KL) et l'axe de basculement (KI) sont liés entre eux dans toutes les positions du porte-charge (1).

4. Porte-charge selon l'une des revendications précédentes, **caractérisé en ce que** dans l'état ouvert du porte-charge (1) les bras de support (5a) sont alignés entre eux et après la libération d'un verrouillage (62) d'un mécanisme de basculage (60) peuvent être basculés autour de l'axe de basculement (KI) par rapport à la base (4), alors que dans l'état replié du porte-charge (1) les bras de support (5a) sont arrangés dans une zone à base fixe repliée vers le haut, de sorte qu'un basculement est empêché aussi en cas d'un désengrenage du verrouillage (62) du mécanisme de basculage (60).

5. Porte-charge selon l'une des revendications précédentes, **caractérisé en ce que** sur la base (4) est prévu un palier (4), dans lequel est appuyée de manière basculante une zone de palier conformée sur le système de support (5).

6. Porte-charge selon l'une des revendications précédentes, **caractérisé en ce que** le système de support (5) est appuyé dans la base (4), fixé en direction de l'axe de basculement (KI).

7. Porte-charge selon l'une des revendications précédentes, **caractérisé en ce que** le porte-charge (1) présente un dispositif de couplage (2), au moyen duquel le porte-charge (1) peut être attaché de manière amovible à un attelage de remorque (3) avec une tête essentiellement sphérique (3a), où le porte-charge (1) est en particulier appuyable de manière stabilisée sur l'attelage de remorque (3), ensuite un étrier de tension (21) peut être pivoté au-dessus de la tête (3a) de l'attelage de remorque (3) et fixé en serrant l'étrier de tension (21), et le pivotement et serrage de l'étrier de tension (21) a lieu par un mouvement de rotation d'un seul levier qui sert d'élément de commande (10) autour de l'axe de rabattement (KL), le levier qui sert d'élément de commande (10) formant aussi et en même temps la zone de réglage (8) et comprenant une partie de la base (4) et du système de support (5).

8. Porte-charge selon la revendication 7, **caractérisé en ce que** le mouvement de rotation du levier (10), au moyen d'un seul élément de transfert (36) qui appartient à la base (4), peut être transféré au dispositif de couplage (2), et que le dispositif de couplage (2) présente un système de transmission qui transpose le mouvement de rotation du levier (10) dans une première section en un mouvement de rotation de l'étrier de tension (21) et dans une seconde section en un mouvement de serrage de l'étrier de tension (21).

9. Porte-charge selon l'une des revendications précédentes, **caractérisé en ce qu'**un système de transmission est prévu, lequel en partant d'un mouvement net de rotation d'une section du système de support (5) avec une section de la base (4) provoque le pivotement d'un étrier de tension (21) et le serrage de l'étrier de tension (21), est formé par une transmission et/ou mécanisme à came, le système de transmission étant une partie de la base (4).

10. Porte-charge selon l'une des revendications précédentes, **caractérisé en ce qu'**un élément de transfert (36), entre une section de la base (4) pivotant autour de l'axe de rabattement (KL) et un dispositif de couplage (2) est prévu, lequel est arrangé de façon concentrique ou excentrique quant à l'axe de rabattement (KL) du levier (10), et qui transmet le mouvement de rotation à un système de transmission, qui génère le mouvement du dispositif de couplage (2).
